# EUROPEAN PATENT APPLICATION

(11) **EP 2 728 265 A1**
(43) Date of publication of application: **07.05.2014**
(21) Application number: 11868772.2
(22) Date of filing: 06.07.2011
(51) Int. Cl.: F24C 7/00

(54) **INDUCTION RANGE HAVING IMPROVED DURABILITY BY REDUCING HEAT TRANSMISSION USING AN INDUCTION HEATING PART**

(30) Priority: 29.06.2011 KR 20110063910
(71) Applicant: Dipo Induction Co., Ltd., Hanam-si, Gyeonggi-do 465-120 (KR)
(72) Inventor: KWON, Yong-Jai, Seoul 138-160 (KR)
(74) Representative: Algemeen Octrooi- en Merkenbureau B.V.
(86) International application number: PCT/KR2011/004929
(87) International publication number: WO 2013/002444

(57) **Abstract**

Disclosed is an induction range having improved durability and a height difference with respect to a cooking vessel. The induction range comprises: an induction heating part for heating a cooking vessel using electromagnetic induction; a glass part formed on an upper portion of the induction heating part; and a circumference part having a shape surrounding the circumference of the glass part and having a height greater than the glass part so as to provide a vertically stepped portion with respect to the glass part.

## Description

### [Technical Field]

The present invention relates to an induction range having improved durability by reducing heat transfer into an induction heating unit and, more particularly, to an induction range, which can prevent electronic devices within the induction range from damage or malfunction due to heat transferred into the induction range from a cooking vessel heated by the induction range, thereby improving durability by reducing heat transfer into an induction heating unit.

### [Background Art]

Generally, an induction range based on induction heating has an energy efficiency of about 90%, which is much higher than that of a hi-light range and a gas range having an energy efficiency of 30% to 40%. In addition, since induction ranges have minimal fire hazard and do not generate toxic gases, as compared with a hot plate, induction ranges have been highlighted as an eco-friendly, high-quality cooking vessel and are increasingly used in large restaurants, hotels, and the like.

However, due to direct contact between the induction range and a cooking vessel heated by the induction range, heat is transferred from the cooking vessel to the induction range, thereby causing damage or malfunction of electronic devices within the induction range.

Therefore, there is a need for an induction range that can heat a cooking vessel through electromagnetic induction and can prevent heat transfer into the induction range to improve durability thereof.

### [Disclosure]

### [Technical Problem]

An aspect of the present invention is to provide an induction range, which has a height difference between a glass portion and a circumference portion to improve durability by reducing heat transfer from a cooking vessel to an induction heating unit so as to prevent inner components of the induction range from being damaged and malfunctioning due to heat from the cooking vessel heated by the induction heating unit.

### [Technical Solution]

In accordance with one aspect of the present invention, an induction range having improved durability includes: an induction heating unit heating a cooking vessel through electromagnetic induction; a glass portion formed on an upper side of the induction heating unit; and a circumference portion surrounding a circumference of the glass portion and having a greater height than the glass portion to provide a vertical step between the glass portion and the circumference portion.

In accordance with another aspect of the invention, an induction range having improved durability includes: an induction heating unit heating a cooking vessel through electromagnetic induction; a glass portion formed on an upper side of the induction heating unit; a circumference portion surrounding a circumference of the glass portion and having a greater height than the glass portion to provide a vertical step between the glass portion and the circumference portion; and a plurality of support protrusions formed on an upper surface of the circumference portion to contact a bottom surface of the cooking vessel and separating the circumference portion from the cooking vessel.

In accordance with a further aspect of the invention, an induction range having improved durability includes: an induction heating unit heating a cooking vessel through electromagnetic induction; a glass portion formed on an upper side of the induction heating unit; a circumference portion surrounding a circumference of the glass portion and having a greater height than the glass portion to provide a vertical step between the glass portion and the circumference portion; and a plurality of support protrusions formed on an upper surface of the glass portion to contact a bottom surface of the cooking vessel and separating the glass portion from the cooking vessel.

### [Advantageous Effects]

According to the present invention, the induction range having improved durability may prevent electronic devices within the induction range from being damaged by heat transferred from a cooking vessel, thereby increasing product reliability while decreasing economic loss due to replacement of components.

According to the present invention, the induction range having improved durability may provide efficient protection of electronic devices within the induction range from heat and may decrease inner temperature of the induction range by easily preventing heat transfer into the induction range.

### [Description of Drawings]

Fig. 1 is a schematic perspective view of an induction range having improved durability in accordance with a first embodiment of the present invention;
Fig. 2 is a vertical sectional view of the induction range having improved durability in accordance with the first embodiment of the present invention, with a cooking vessel placed thereon;
Fig. 3 is a schematic perspective view of an induction range having improved durability in accordance with a second embodiment of the present invention;
Fig. 4 is a vertical sectional view of the induction range having improved durability in accordance with the second embodiment of the present invention, with a cooking vessel placed thereon;
Fig. 5 is a schematic perspective view of an induction range having improved durability in accordance with a third embodiment of the present invention.
Fig. 6 is a schematic perspective view of an induction range having improved durability in accordance with a fourth embodiment of the present invention;
Fig. 7 is a vertical sectional view of the induction range having improved durability in accordance with the fourth embodiment of the present invention, with a cooking vessel placed thereon; and
Fig. 8 and Fig. 9 are perspective views of the induction range having improved durability in accordance with the fourth embodiment of the present invention, showing support protrusions formed thereon.

### [Best Mode]

Hereinafter, embodiments of the present invention will be described in more detail with reference to the accompanying drawings.

The above and other aspects, features, and advantages of the present invention will become apparent from the detailed description of the following embodiments in conjunction with the accompanying drawings. However, it should be understood that the present invention is not limited to the following embodiments and may be embodied in different ways, and that the embodiments are provided for complete disclosure and thorough understanding of the present invention by those skilled in the art. The scope of the present invention is defined only by the claims. In addition, descriptions of details apparent to those skilled in the art will be omitted for clarity.

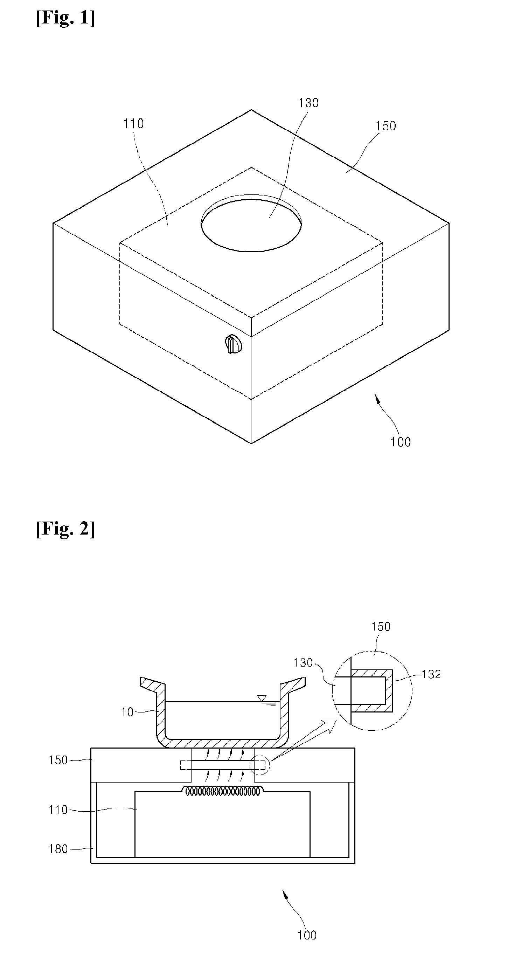

Fig. 1 is a schematic perspective view of an induction range having improved durability in accordance with a first embodiment of the present invention.

Referring to Fig. 1, an induction range 100 having improved durability according to the embodiment of the invention is formed to heat a cooking vessel through electromagnetic induction.

The induction range 100 includes an induction heating unit 110 heating a cooking vessel through electromagnetic induction, a glass portion 130 formed on an upper side of the induction heating unit 110, and a circumference portion 150 surrounding a circumference of the glass portion 130.

In the induction range 100, the circumference portion 150 has a greater height than the glass portion 130. Here, the glass portion 130 and the circumference portion 150 have a vertical step therebetween.

The vertical step between the glass portion 130 and the circumference portion 150 prevents the glass portion 130 from directly contacting a cooking vessel placed on the induction range. That is, when the glass portion 130 directly contacts the cooking vessel, the cooking vessel is heated through electromagnetic induction, and heat can be transferred to the contact surface of the glass portion 130. Such heat transfer is undesirable in terms of protection of inner components of the induction range 100. In addition, the heat transfer to the glass portion 130 is not desirable in terms of thermal efficiency.

Fig. 2 is a vertical sectional view of the induction range having improved durability in accordance with the first embodiment of the present invention, with a cooking vessel placed thereon.

Referring to Fig. 2, the induction range 100 includes the induction heating unit 110 heating a cooking vessel 10 through electromagnetic induction, the glass portion 130 formed on the upper side of the induction heating unit 110, the circumference portion 150 surrounding the circumference of the glass portion 130, and an exterior case 180 constituting an outer appearance of the induction range.

The induction heating unit 110 is configured to heat the cooking vessel 10 through electromagnetic induction. That is, the cooking vessel 10 is heated by induced current as a heat source, which is generated by a magnetic field. Here, since the induction heating unit 110 employs electromagnetic induction, the induction heating unit 110 is composed of a metallic material.

In addition, the induction heating unit 110 may include a separate power source (not shown). With this structure, the induction heating unit 110 may be operated by power supplied therefrom.

The glass portion 130 is formed on the upper side of the induction heating unit 110.

The glass portion 130 may be made of a ceramic or reinforced-glass material having heat resistance. This is because heat transfer to the glass portion 130 is undesirable in protection of the inner components of the induction range. In addition, when heat is transferred to the glass portion 130, the heat can also be transferred to the induction heating unit 110, thereby causing deterioration in thermal efficiency.

The glass portion 130 may be surrounded by the circumference portion 150. Here, a portion of the glass portion 130 surrounded by the circumference portion 150 may be made of an insulating material 132. Here, the insulating material 132 is a material for reducing heat loss or heat inflow by covering an exterior side of a target portion to be kept at constant temperature, and may include asbestos, glass fibers, coke, and expanded plastics.

When the glass portion 130 is surrounded by the circumference portion 150, the glass portion 130 may be fixedly inserted in a sliding manner or may be fixed by bolts and nuts. In this manner, the glass portion 130 may be surrounded by the circumference portion 150 to be connected thereto in various ways. Thus, the present invention is not limited to a specific shape surrounding the glass portion 130.

The circumference portion 150 surrounds a circumference of the glass portion 130. In addition, the circumference portion 150 has a greater height than the glass portion 130, thereby providing a vertical step between the circumference portion 150 and the glass portion 130.

Here, the cooking vessel 10 contacts the circumference portion 150 through a vertical step such that the glass portion 130 does not directly contact a surface of the cooking vessel 10. As a result, the circumference portion 150 and the glass portion 130 have the vertical step therebetween, thereby preventing direct heat transfer from the cooking vessel to the circumference portion 150 of the glass portion 130. Accordingly, the induction range may prevent heat transfer to the induction heating unit therein, thereby improving durability.

Accordingly, when the cooking vessel 10 is placed on the circumference portion 150, the cooking vessel 10 is separated from the glass portion 150 by the vertical step between the circumference portion 150 and the glass portion 130. As such, the vertical step between the circumference portion 150 and the glass portion 130 may prevent direct heat transfer from the cooking vessel 10 to the glass portion 130. The circumference portion 150 may be made of corrosion-resistant stainless steel.

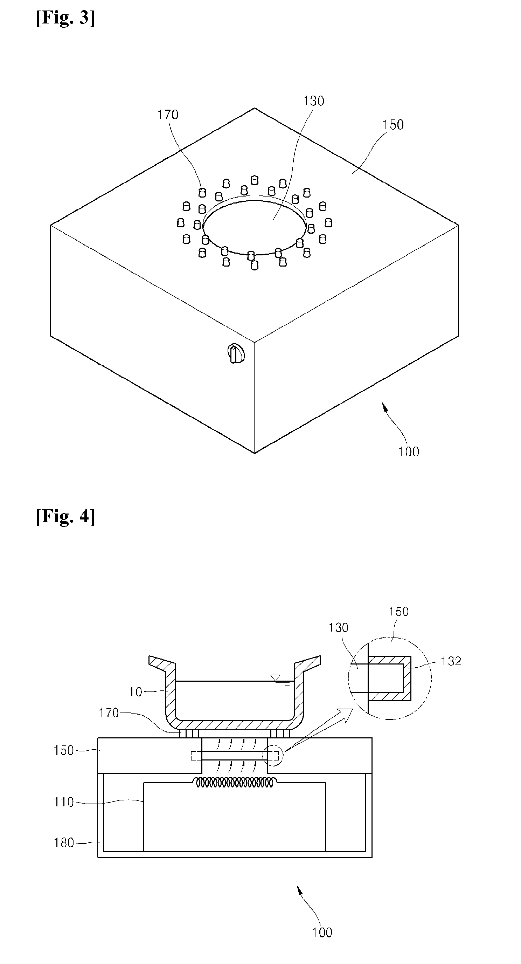

Fig. 3 is a schematic perspective view of an induction range having improved durability in accordance with a second embodiment of the present invention.

Referring to Fig. 3, an induction range 100 according to this embodiment includes a glass portion 130, a circumference portion 150 surrounding a circumference of the glass portion 130, a plurality of support protrusions 170 formed on an upper surface of the circumference portion 150, and an induction heating unit heating a cooking vessel through electromagnetic induction.

In the induction range 100, the circumference portion 150 has a greater height than the glass portion 130. Here, the glass portion 130 and the circumference portion 150 have a vertical step therebetween.

In addition, the plurality of support protrusions 170 may be formed on the upper surface of the circumference portion 150. Here, the vertical step between the glass portion 130 and the circumference portion 150 prevents the glass portion 130 from directly contacting a cooking vessel placed on the induction range. The support protrusions 170 serve to separate the cooking vessel from the circumference portion 150 when the cooking vessel is placed thereon. With this structure, prevention of direct heat transfer from the cooking vessel to the circumference portion 150 is possible. In addition, it is possible to reduce heat transfer by minimizing a contact area between a bottom surface of the cooking vessel and the induction range through the support protrusions 170.

The support protrusions 170 may be integrally formed with the circumference portion 150, or may be separately provided to the circumference portion 150 to be attached thereto.

Fig. 4 is a vertical sectional view of the induction range having improved durability in accordance with the second embodiment of the present invention, with a cooking vessel placed thereon.

Referring to Fig. 4, the induction range 100 according to the second embodiment may include the induction heating unit 110, the glass portion 130 formed on the upper side of the induction heating unit 110, the circumference portion 150 surrounding the circumference of the glass portion 130, the plurality of support protrusions formed on the upper surface of the circumference portion 150, and an exterior case 180 constituting an outer appearance of the induction range.

As shown, in the induction range 100 according to the second embodiment, the support protrusions 170 are formed on the upper surface of the circumference portion 150. The support protrusions 170 may be provided with an insulating material (not shown) at contact areas thereof with a bottom surface of the cooking vessel 10 since the cooking vessel 10 heated by the induction heating unit 110 can directly contact the upper side of the induction heating unit.

In addition, as the support protrusions 170 are formed on the upper surface of the circumference portion 150, it is possible to shield heat transfer from the cooking vessel 10 to the glass portion 130. Heat can be transferred from the cooking vessel 10 to the glass portion 130 by conduction, radiation, and convection. Among these, most heat is transferred through conduction.

Conduction is heat transfer via direct contact and decreases with decreasing contact area. In the induction range 100 according to the second embodiment, the bottom surface of the cooking vessel 10 contacts the upper portion of the support protrusions 170 instead of entirely contacting the circumference portion 150, thereby reducing heat transfer from the cooking vessel 10 to the glass portion 130.

Descriptions of other components of the induction range 100 according to the second embodiment are the same as those of the induction range according to the first embodiment, and thus will be omitted herein.

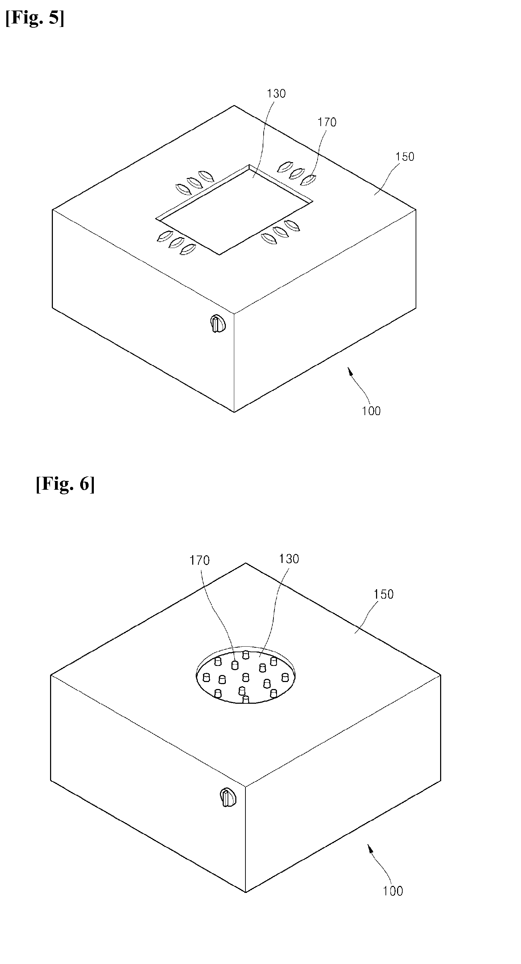

Fig. 5 is a schematic perspective view of an induction range having improved durability in accordance with a third embodiment of the present invention.

Referring to Fig. 5, an induction range 100 according to the third embodiment includes a glass portion 130, a circumference portion 150 surrounding a circumference of the glass portion 130, and a plurality of support protrusions 170 formed on an upper surface of the circumference portion 150.

In the induction range 100 according to this embodiment, the circumference portion 150 has a greater height than the glass portion 130. Here, the circumference portion 150 and the glass portion 130 are formed to have a vertical step therebetween. The vertical step between the glass portion 130 and the circumference portion 150 may have a height of 0.5 mm±0.1 mm. For example, the vertical step of the glass portion 130 and the circumference portion 150 may be 0.5mm. Here, the vertical step between the glass portion 130 and the circumference portion 150 prevents the glass portion 130 from directly contacting the cooking vessel placed thereon. That is, when the glass portion 130 directly contacts the cooking vessel, the cooking vessel is heated through electromagnetic induction, whereby heat can be transferred to the glass portion 130.

The support protrusions 170 serve to separate the cooking vessel from the circumference portion 150 when the cooking vessel is placed thereon. With this structure, it is possible to prevent direct heat transfer from the cooking vessel to the circumference portion 150. In addition, it is possible to reduce heat transfer by minimizing a contact area between the bottom surface of the cooking vessel and the induction range through the support protrusions 170.

Here, the support protrusions 170 may have a height of 1 mm±0.1 mm. Preferably, the support protrusions 170 have a height of 0.1 mm. Since the shape and height of the protrusions may be modified in various ways, the present invention is not limited to a specific shape and height.

The support protrusions 170 may be integrally formed with the circumference portion 150, or may be separately provided to the circumference portion 150 to be attached thereto.

Fig. 6 is a schematic perspective view of an induction range having improved durability in accordance with a fourth embodiment of the present invention.

Referring to Fig. 6, an induction range 100 according to the fourth embodiment includes an induction heating unit heating a cooking vessel through electromagnetic induction, a glass portion 130 formed on an upper side of the induction heating unit, a circumference portion 150 surrounding a circumference of the glass portion 130, and a plurality of support protrusions 170 formed on an upper surface of the glass portion 130.

Here, the support protrusions 170 are formed on the upper surface of the glass portion 130 to contact a bottom surface of a cooking vessel. In addition, the support protrusions 170 are formed to separate the cooking vessel from the glass portion 130. As such, since the cooking vessel is separated from the glass portion 130, the support protrusions 170 may prevent direct heat transfer from the cooking vessel to the glass portion 130.

In the induction range 100 according to this embodiment, the glass portion 130 has a greater height than the circumference portion 150. Here, the circumference portion 150 and the glass portion 130 are formed to have a vertical step therebetween. In addition, the glass portion 130 may have a plurality of support protrusions 170 formed on the upper surface thereof.

Here, the vertical step between the glass portion 130 and the circumference portion 150 prevents the glass portion 130 from directly contacting the cooking vessel placed thereon. The support protrusions 170 serve to separate the cooking vessel from the glass portion 130 when the cooking vessel is placed thereon. With this structure, prevention of direct heat transfer from the cooking vessel to the glass portion 130 is possible. In addition, it is possible to reduce heat transfer by minimizing a contact area between the bottom surface of the cooking vessel and the induction range through the support protrusions 170.

The support protrusions 170 may be integrally formed with the circumference portion 150, or may be separately provided to the circumference portion 150 to be attached thereto.

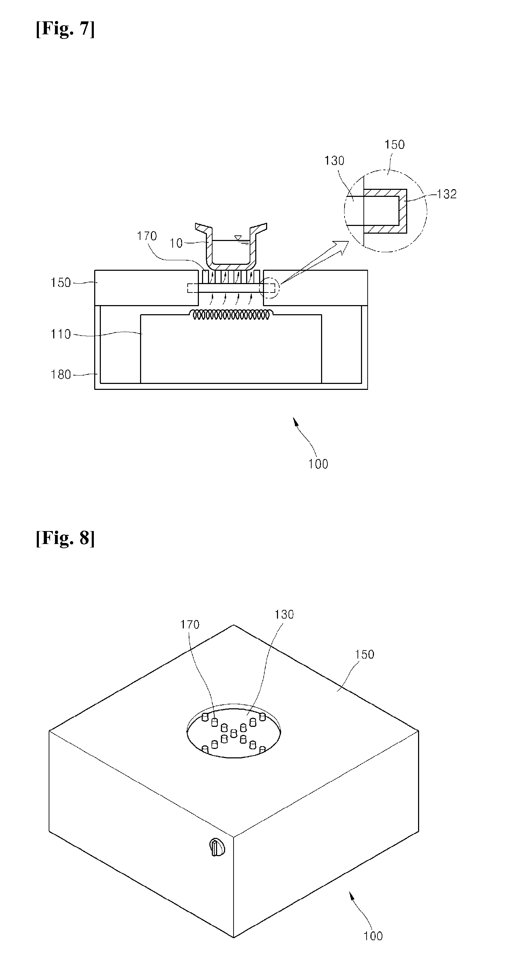

Fig. 7 is a vertical sectional view of the induction range having improved durability in accordance with the fourth embodiment of the present invention, with a cooking vessel placed thereon.

Referring Fig.7, the induction range 100 according to the fourth embodiment includes the induction heating unit 110 heating a cooking vessel 10 through electromagnetic induction, the glass portion 130 formed on the upper side of the induction heating unit 110, the circumference portion 150 surrounding the circumference of the glass portion 130, and the plurality of support protrusions 170 formed on the upper surface of the glass portion 130.

As shown, in the induction range 100 according to the fourth embodiment, the support protrusions 170 are formed on the upper surface of the glass portion 130.

In the induction range 100 according to the fourth embodiment, the support protrusions 170 are formed on the surface of the glass portion 130, thereby providing various merits when heating a small cooking vessel 10.

In addition, as the support protrusions 170 are formed on the upper surface of the glass portion 130, it is possible to shield heat transfer from the cooking vessel 10 to the glass portion 130. As a result, the induction range may prevent heat transfer into the induction heating unit, thereby providing improved durability.

Thus, when the cooking vessel 10 is placed on the glass portion 130 to cover the glass portion 130, there is a vertical step between the glass portion 130 and the cooking vessel 10. As a result, the circumference portion 150 may be formed to shield direct heat transfer from the cooking vessel 10 to the glass portion 130.

Descriptions of other components of the induction range 100 according to the fourth embodiment are the same as those of the induction ranges according to the first, second and third embodiments, and thus will be omitted herein.

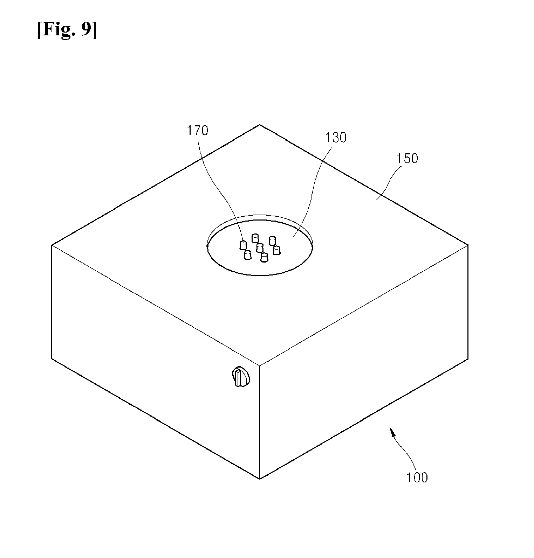

Fig. 8 and Fig. 9 are perspective views of the induction range having improved durability in accordance with the fourth embodiment of the present invention, showing support protrusions formed thereon.

First, referring to Fig. 8, the support protrusions 170 are formed on the upper surface of the glass portion 130 in an X-shaped pattern.

Such configuration of the support protrusions 170 may allow stable positioning of a small cooking vessel when the cooking vessel is placed and heated on the induction range. In addition, the support protrusions 170 may prevent heat transfer from the induction heating unit.

Next, referring to Fig. 9, the plural support protrusions are formed on a central upper surface of the glass portion 130.

As with the support protrusions 170 shown in Fig. 8, the support protrusions 170 may allow stable positioning of a small cooking vessel when the cooking vessel is placed and heated on the induction range. In addition, the support protrusions 170 may prevent heat transfer from the cooking vessels to the glass portion 130.

As described, the induction range having improved durability according to the present invention may prevent electronic devices within the induction range from being damaged by heat, thereby increasing product reliability while decreasing economic loss due to replacement of components.

In addition, the induction range according to the present invention may provide efficient protection of electronic devices within the induction range from heat by easily preventing heat transfer into the induction range.

Further, the induction range according to the present invention may decrease inner temperature of the induction range by easily preventing heat transfer into the induction range.

Although some embodiments have been described herein, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

## Claims

1. An induction range having improved durability, comprising:
an induction heating unit heating a cooking vessel through electromagnetic induction;
a glass portion formed on an upper side of the induction heating unit; and
a circumference portion surrounding a circumference of the glass portion and having a greater height than the glass portion to provide a vertical step between the glass portion and the circumference portion.

2. The induction range according to claim 1, wherein a portion of the glass portion surrounded by the circumference portion comprises an insulating material.

3. The induction range according to claim 1, wherein the glass portion comprises a ceramic or reinforced glass material having heat resistance.

4. An induction range having improved durability comprising:
an induction heating unit heating a cooking vessel through electromagnetic induction;
a glass portion formed on an upper side of the induction heating unit;
a circumference portion surrounding a circumference of the glass portion and having a greater height than the glass portion to provide a vertical step between the glass portion and the circumference portion; and
a plurality of support protrusions formed on an upper surface of the circumference portion to contact a bottom surface of the cooking vessel and separating the circumference portion from the cooking vessel.

5. The induction range according to claim 4, wherein a portion of the glass portion surrounded by the circumference portion comprises an insulating material.

6. The induction range according to claim 4, wherein the glass portion comprises a ceramic or reinforced glass material having heat resistance.

7. The induction range according to claim 4, wherein the support protrusions are integrally formed with, or are separately provided to the upper surface of the circumference portion.

8. The induction range according to claim 4, wherein a portion of each of the support protrusions contacting a bottom surface of a cooking vessel comprises an insulating material.

9. An induction range having improved durability, comprising:
an induction heating unit heating a cooking vessel through electromagnetic induction;
a glass portion formed on an upper side of the induction heating unit;
a circumference portion surrounding a circumference of the glass portion and having a greater height than the glass portion to provide a vertical step between the glass portion and the circumference portion; and
a plurality of support protrusions formed on an upper surface of the glass portion to contact a bottom surface of the cooking vessel and separating the glass portion from the cooking vessel.

10. The induction range according to claim 9, wherein the support protrusions are formed on the upper surface of the glass portion in an X-shaped pattern.

11. The induction range according to claim 9, wherein the support protrusions are formed on an central upper surface of the glass portion.
